# EUROPEAN PATENT APPLICATION

(11) **EP 3 012 615 A1**
(43) Date of publication of application: **27.04.2016**
(21) Application number: 14813409.1
(22) Date of filing: 27.05.2014
(51) Int. Cl.: G01N 21/03, G01N 21/07, G01N 21/64

(54) **CONTAINER FOR OPTICAL MEASUREMENT**

(30) Priority: 19.06.2013 JP 2013128599
(71) Applicant: Olympus Corporation, Shibuya-ku Tokyo 151-0072 (JP)
(72) Inventor: NAKATA, Hidetaka, Tokyo 151-0072 (JP)
(74) Representative: Schicker, Silvia
(86) International application number: PCT/JP2014/064037
(87) International publication number: WO 2014/203693

(57) **Abstract**

A container for optical measurement (1) includes: a container main body (2) including a tubular-shaped side wall part (4) having one end blocked with a bottom-face part (5) and having the other end that is open, the side wall part being made up of a single member; and a filter (3) that is fixed to an inner face of the side wall part (4) so as to divide a space inside the side wall part (4) into a side on the bottom-face part (5) side and on a side of the other end that is open. At least a part of the container main body (2) facing the space (10) on the side of the bottom-face part (5) is made of a material letting light pass therethrough.

## Description

### [Technical Field]

The present invention relates to a container for optical measurement.

### [Background Art]

A plate-separation type container for filtration is known, including a plate having a bottom part provided with a filter, and a collection plate on which the plate is loaded detachably, which is configured to filter fluid loaded on the filter of the plate by suction with vacuum or high-speed centrifugation to the collection-plate side (see Patent Document 1, for example).

### [Citation List]

### [Patent Document]

[PTL 1] JP 2004-4079 A

### [Summary of the Invention]

### [Problems to be solved by the Invention]

The container for filtration of Patent Document 1 is configured so that the detachment of the plate makes the collection plate open to the above, and so for ultra-high sensitive optical measurement purposes, dust or the like in the air entering into the collection plate becomes noise source, thus degrading the measurement accuracy unfortunately. A user who uses the container for filtration of Patent Document 1, therefore, has to keep the plate and the collection plate and assemble them under a clean environment with less dust, thus requiring a lot of facilities and labor.

In view of the above circumstance, it is an object of the present invention to provide a container for optical measurement capable of performing ultra-high sensitive optical measurement accurately without keeping the container under a clean environment.

### [Solution to Problem]

One aspect of the present invention provides a container for optical measurement, including: a container main body including a tubular-shaped side wall part having one end blocked with a bottom-face part and having the other end that is open, the side wall part being made up of a single member; and a filter that is fixed to an inner face of the side wall part so as to divide a space inside the side wall part into a side on the bottom-face part side and on a side of the other end that is open. At least a part of the container main body facing the space on the side of the bottom-face part is made of a material letting light pass therethrough.

According to the present aspect, the space on the side of the bottom-face part, which is defined by the filter that is fixed to an inner face of the side wall part that is made of a single member, defines a closed space that always communicates with the outside through the filter only. Then sample liquid is supplied to the space on the open-end side, and is moved to the space on the bottom-face side via the filter by centrifugal force or the like for filtration, resulting in the sample fluid, from which particles in size larger than that of the size of holes of the filter have been removed, being stored in the space on the bottom-face side. This enables ultra-high sensitive optical measurement for the sample liquid with less noise source because noise source for optical measurement has been removed, by irradiating the sample liquid in the space on the bottom-face side with light from the outside of the container main body.

In this case, since the side wall part is configured to be tubular made up of a single member, a user is not allowed to open the space on the bottom-face side to the air. Then, once particles such as noise source in the space are removed at the stage of manufacturing, ultra-high sensitive optical measurement can be performed accurately without the need for users of keeping and assembling the container for optical measurement under a clean environment.

Herein the "single member" does not have to be configured with a "single component", which may include a plurality of components that are connected by bonding or other means for integration so as not to let a user disconnect them. In this way, this may be made of a single material or may be a joint member made of different materials.

In the above aspect, at least a part of the bottom-face part may be made of a material letting light pass therethrough.

This can facilitate optical measurement of sample liquid irrespective of the amount of sample liquid stored in the space on the bottom-face part side by irradiating the container main body disposed so that the bottom-face part is located below with light for measurement from the below of the bottom-face part.

In the above aspect, at least a part of the side wall part facing the space on the side of the bottom-face part may be made of a material letting light pass therethrough.

This enables optical measurement from the side face of the container main body as well, when the part made of a material letting light pass therethrough is located below the fluid level of the sample liquid.

In the above aspect, the space on the side of the bottom-face part and the space on the other end side each may include a plurality of spaces divided in a direction intersecting the direction of an axis of the side wall part.

With this configuration, sample liquid can be held in the plurality of spaces on the other-end side that are defined in the side wall part, whereby optical measurement of the sample liquid stored in the plurality of spaces on the bottom-face part side via the filter can be performed successively or at once. This can improve the work efficiency of optical measurement of the sample liquid.

The above aspect further may include a partition wall that divides the space on the other end side in a direction intersecting the direction of an axis of the side wall part.

With this configuration, sample liquid is supplied to the space on one side that is divided by the partition wall, while sample liquid is not applied to the space on the other side. Then when the sample liquid moves to the space on the bottom-face part side via the filter, air in the space on the bottom-face part side can be exhausted via the filter at the space on the other side to which the sample liquid is not supplied. This enables filtration to be performed smoothly.

In the above aspect, the partition wall may be connected to the filter in a liquid tight manner.

This can prevent sample liquid supplied to the space on one side from moving to the space, to which the sample is not supplied, via a gap between the partition wall and the filter. This can secure an air-exhaust passage during filtration of the sample liquid.

In the above aspect, optical measurement may be fluorescence measurement.

Fluorescence measurement has high sensitivity and so is susceptible to noise source such as particles in the sample liquid. This configuration, however, enables ultra-high sensitive fluorescence measurement for sample liquid from which noise source has been removed.

### [Advantageous Effect of the Invention]

The present invention has the advantageous effect of enabling ultra-high sensitive optical measurement accurately without keeping the container under a clean environment.

### [Brief Description of the Drawings]

[Fig. 1A] Fig. 1A is a plan view showing a container for optical measurement according to one embodiment of the present invention.
[Fig. 1B] Fig. 1B is a vertical cross-sectional view along A-A of the container for optical measurement of Fig. 1A.
[Fig. 2] Fig. 2 is a cross-sectional view showing one vertical cross section to illustrate a container for optical measurement according to a first modification example of the present invention.
[Fig. 3A] Fig. 3A is a plan view showing a container for optical measurement according to a second modification example of the present invention.
[Fig. 3B] Fig. 3B is a vertical cross-sectional view along B-B of the container for optical measurement of Fig. 3A.
[Fig. 4] Fig. 4 is a plan view showing a container for optical measurement according to a third modification example of the present invention.
[Fig. 5] Fig. 5 is a plan view showing a container for optical measurement according to a fourth modification example of the present invention.
[Fig. 6] Fig. 6 is a plan view showing a container for optical measurement according to a fifth modification example of the present invention.

### [Description of Embodiment]

The following describes a container for optical measurement 1 according to one embodiment of the present invention, with reference to the drawings.

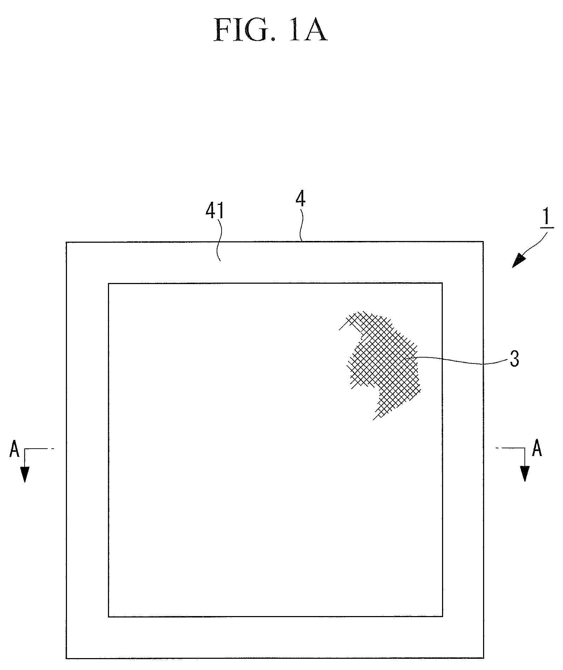

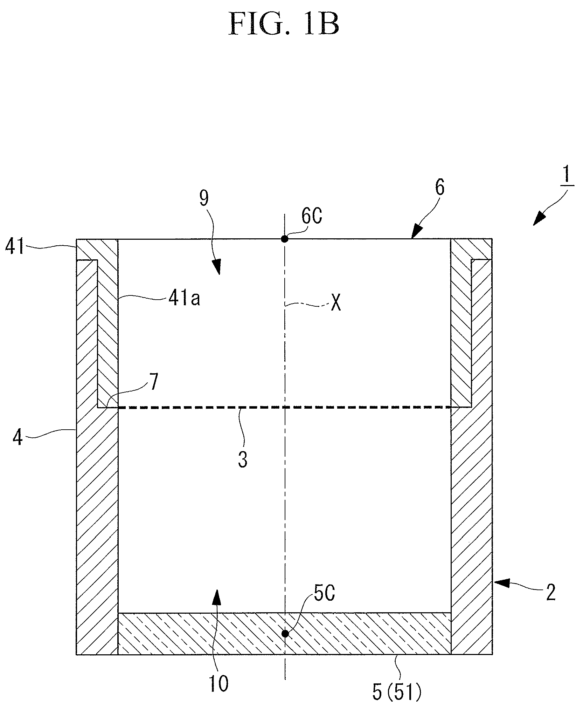

As illustrated in Figs. 1A and 1B, the container for optical measurement 1 according to the present embodiment includes a container main body 2 and a filter 3 that divides an internal space of the container main body 2.

As illustrated in Figs. 1A and 1B, the container main body 2 includes a foursquare tubular-shaped side wall part 4 having one end blocked with a bottom-face part 5 and having the other end that is open, and being made up of a single member. The side wall part 4 is made of a liquid-tight material (e.g., polystyrene, polyethylene or polycarbonate).

As illustrated in Fig. 1B, the side wall part 4 has a step-height 7 at its inner face at a part between the bottom-face part 5 and an opening part 6. A fitting member 41 is fitted to the step-height 7 from the above. The fitting member 41 is fitted to the side wall part 4 until it butts against the step-height 7.

The fitting member 41 is made of a liquid-tight material (e.g., polystyrene, polyethylene or polycarbonate) like the side wall part 4. The side wall part 4 and the fitting member 41 are fitted, and their fitted faces are bonded with an adhesive over the entire faces.

The bottom-face part 5 is made of a transparent and liquid-tight material (e.g., glass, polycarbonate, polypropylene, polystyrene, cycloolefin-based resin or epoxy resin). The bottom-face part 5 makes up a measurement part 51 to let light for measurement be incident therein from the outside and let fluorescence generated internally pass therethrough.

The filter 3 is made up of a porous member for filtration (e.g., polyvinylidene fluoride (PVDF), mixed celluloseester (MCE), polycarbonate, cellulose phosphate, diethylethanolamine (DEAE) or fiberglass) having a large number of ultra-small holes. The size of the holes is smaller than that of noise source for fluorescence measurement, such as dust in the air (e.g., bacteria, house dust, fiber dust and pollen dust) and a foreign matter in the sample liquid (e.g., magnetic beads, dust coming from a living body such as cellular debris, and fine particles). Then the filter 3 is sandwiched between the step-height 7 of the side wall part 4 and the fitting member 41 to be fixed undetachably.

This divides the space (space in the side wall part 4) of the container main body 2 into a space 9 on the opening part 6 (the space on the other end side) and a space 10 on the bottom-face part 5 side while setting the filter 3 as the border.

As illustrated in Fig. 1B, the space 9 has one end at which the filter 3 is disposed and the other end that is open. Sample liquid can be supplied to the space 9 through the thus open opening part 6.

As illustrated in Fig. 1B, the space 10 is surrounded with the filter 3, the side wall part 4 and the bottom-face part 5, which define a closed space that always communicates with the outside through the filter 3 only.

The space 9 and the space 10 have substantially same volume or the space 9 has volume larger than that of the space 10.

Functions of the thus configured container for optical measurement 1 according to the present embodiment are described below.

When fluorescence measurement of sample liquid is performed using the container for optical measurement 1 according to the present embodiment, the container main body 2 is disposed so that the bottom-face part 5 is located below, and the sample liquid is supplied to the space 9 through the opening part 6 located above. Next, centrifugal force directed from the space 9 to the space 10 is applied so as to move the sample liquid from the inside of the space 9 to the space 10 via the filter 3.

Since particles in the sample liquid having a size larger than the size of the holes of the filter 3 cannot pass through the holes of the filter 3 and remain in the space 9, the space 10 can contain the sample liquid from which noise source has been removed. Then, light is applied to the sample liquid in the space 10 from an irradiation part (not illustrated) that is disposed below the bottom-face part 5 and externally of the container main body 2 via the bottom-face part 5 making up the measurement part 51. Although fluorescence measurement has high sensitivity and so is susceptible to noise source such as particles in the sample liquid, the present embodiment enables ultra-high sensitive fluorescence measurement for sample liquid from which noise source has been removed.

In this case, since the side wall part 4 is configured to be tubular made up of a single member, the space 10 cannot be open. This can lead to the advantage that, once particles such as noise source in the space 10 are removed at the stage of manufacturing, ultra-high sensitive fluorescence measurement can be performed accurately without the need for users of keeping and assembling the container for optical measurement 1 under a clean environment.

Further since the fluorescence measurement is performed with light irradiated from the below of the bottom-face part 5, fluorescence measurement of the sample liquid can be performed easily irrespective of the amount of sample liquid stored in the space 10.

Since centrifugal force is applied in the direction from the space 9 to the space 10, filtration of the sample liquid can be promoted as compared with the case of free-fall of the sample liquid held in the space 9 to the space 10 due to its self weight. This can improve the work efficiency of fluorescence measurement for the sample liquid.

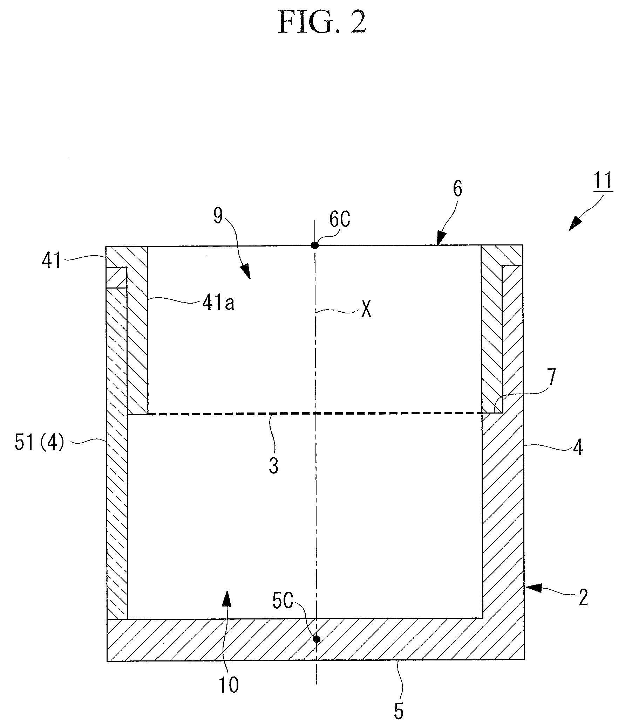

The container for optical measurement 1 according to the present embodiment exemplifies the configuration of the bottom-face part 5 making up the measurement part 51, which is not a limiting example, and the measurement part 51 may be at least a part of the container main body 2 facing the space 10. For instance, as illustrated in Fig. 2, a part of the side wall part 4 may be made of a transparent and liquid tight material (e.g., glass, polycarbonate, polypropylene, polystyrene, cycloolefin-based resin or epoxy resin). Then, fluorescence measurement may be performed by irradiating sample liquid with light from an irradiation part (not illustrated) disposed laterally and outside of the container main body 2. This enables fluorescence measurement from the direction of the side face of the container main body 2 as well, when the measurement part 51 letting light pass therethrough is located below the fluid level of the sample liquid.

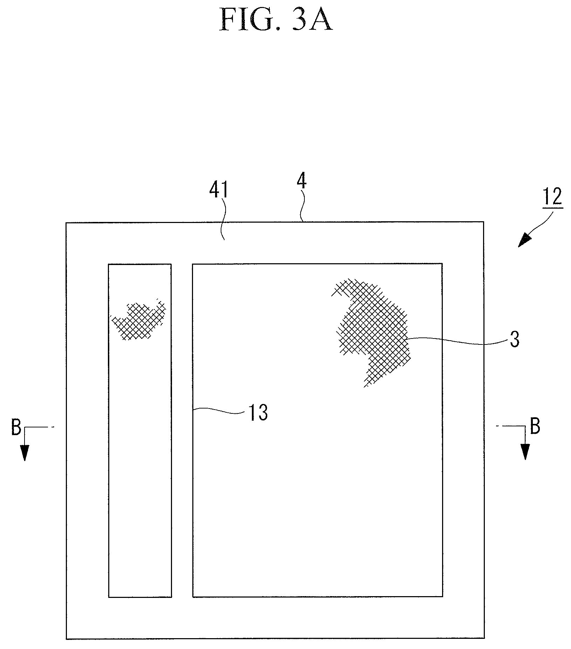

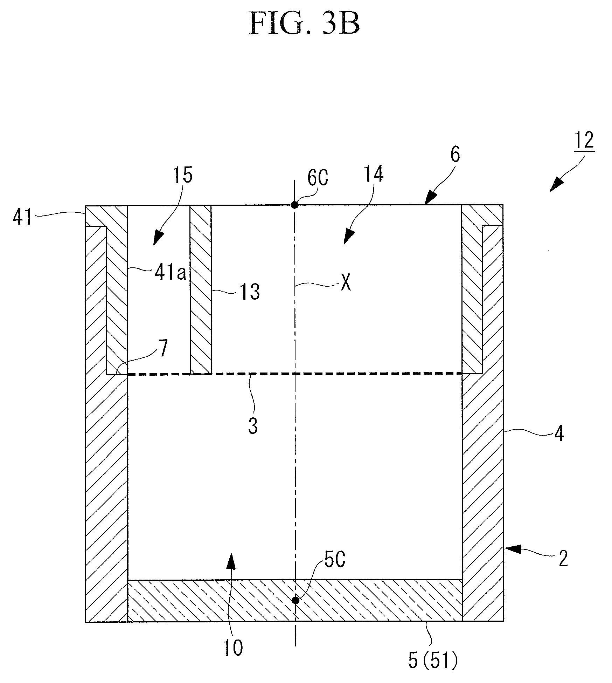

The container for optical measurement 1 of the present embodiment has two spaces 9 and 10 divided in the container main body 2, which is not a limiting example. For instance, as illustrated in Figs. 3A and 3B, a container for optical measurement 12 has a space 9 that is divided by a partition wall 13 in the direction intersecting the axis X of the side wall part 4.

Specifically, the partition wall 13 is made of a liquid-tight material (e.g., polystyrene, polyethylene or polycarbonate). As illustrated in Figs. 3A and 3B, the partition wall 13 is disposed in the space 9 parallel to the axis x of the side wall part 4 so as to connect opposed inner faces 41a of the fitting member 41, and has one end extending to the position coming into contact with the filter 3, thus defining the space 9 into two spaces 14 and 15.

In this case, sample liquid is supplied to the space 14 only on one side that is divided by the partition wall 13, to which centrifugal force is applied, thus moving sample liquid to the space 10 via the filter 3. At this time, air in the space 10 can be exhausted via the filter 3 at the space 15 on the other side, to which sample liquid is not supplied. This enables filtration to be performed smoothly.

In the above-mentioned container for optical measurement 12, the partition wall 13 may be connected to the filter 3 in a liquid-tight manner.

This can prevent sample liquid supplied to the space 14 from moving to the space 15 via a gap between the partition wall 13 and the filter 3. This can secure an air-exhaust passage during filtration of the sample liquid.

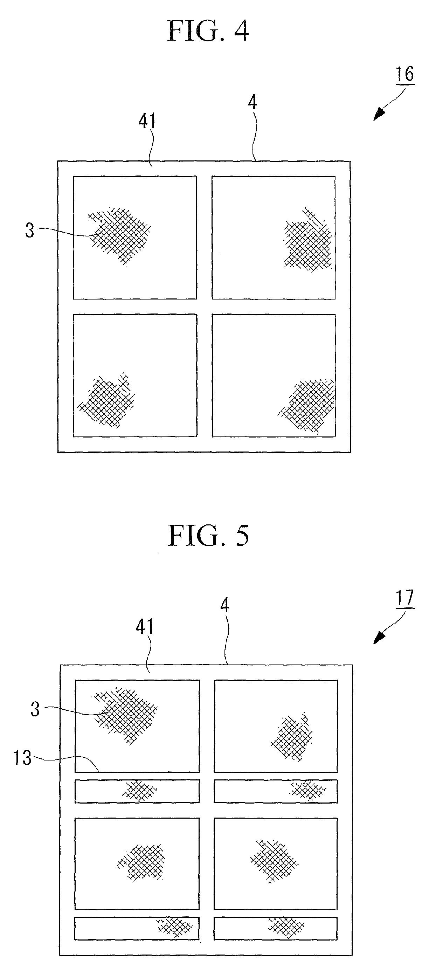

As illustrated in Figs. 4 and 5, as for these containers for optical measurement 1 and 12, container for optical measurement 16 and 17 may have spaces 9 and 10 including a plurality of divided parts in the direction intersecting the axis X direction of the side wall part 4.

In this case, sample liquid can be held in the plurality of spaces 9 that are defined in the side wall part 4, whereby fluorescence measurement of the sample liquid stored in the plurality of spaces 10 via the filter 3 can be performed successively or at once. This can improve the work efficiency of fluorescence measurement of the sample liquid. Fig. 4 illustrates the container for optical measurement 1 having a plurality of spaces for each of the spaces 9 and 10, and Fig. 5 illustrates the container for optical measurement 12 having a plurality of spaces for each of the spaces 9, 14 and 15.

The above exemplifies the case where centrifugal force is applied to the container for optical measurement 1 according to the present embodiment in the direction from the space 9 to the space 10, and instead of this, pressure may be applied thereto. Suction may be performed from the side of the space 15 of the containers for optical measurement 12 and 17, thus generating a difference in pressure between the space 9 and the space 10 to promote filtration of the sample liquid.

In the above-mentioned containers for optical measurement 1, 11, 12, 16 and 17, the side wall part 4 may have a planar shape that is a cylindrical shape or a polygonal tubular shape instead of a foursquare tubular shape as illustrated in Figs. 1A and 3A as long as it has a tubular shape to define a space in the side wall part 4.

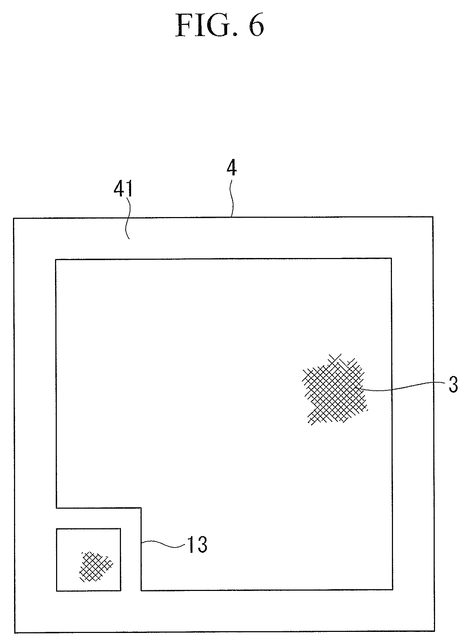

The above-mentioned containers for optical measurement 12 and 17 exemplify the partition wall 13 that connects the opposed inner faces 41a of the fitting member 41. Instead of this, as illustrated in Fig. 6, an L-letter shaped or a curved-face shaped partition wall 13 may be used so as to connect adjacent inner faces. The space 15 to circulate air may be sufficiently smaller than the space 14 into which sample liquid is to be supplied.

The above-mentioned containers for optical measurement 1, 11, 12, 16 and 17 perform fluorescence measurement, which is not a limiting example, and they may be applied to any other optical measurement purposes.

The above-mentioned containers for optical measurement 1, 11, 12, 16 and 17 include the side wall part 4 that is configured to be tubular made up of a single member made of a single material, which is not a limiting example. For instance, a plurality of components may be connected by bonding or other means so as not to let a user disconnect them, thus configuring the side wall part 4 to be tubular made up of a single member. In this case, these components may be made of the same material or different materials.

### [Description of Reference Numerals]

1, 11, 12, 16, 17 container for optical measurement
2 container main body
3 filter
4 side wall part
5 bottom-face part
5C center of bottom-face part
6 opening part
6C center of opening part
7 step-height
9 space on the opening part side (space on the other side)
10 space on the bottom-face part side
13 partition wall
14 space on one side
15 space on the other side
41 fitting member
41a inner face of fitting member
51 measurement part

## Claims

1. A container for optical measurement, comprising:
a container main body comprising a tubular-shaped side wall part having one end blocked with a bottom-face part and having the other end that is open, the side wall part being made up of a single member; and
a filter that is fixed to an inner face of the side wall part so as to divide a space inside the side wall part into a side on the bottom-face part side and on a side of the other end that is open; wherein
at least a part of the container main body facing the space on the side of the bottom-face part is made of a material letting light pass therethrough.

2. The container for optical measurement according to claim 1, wherein
at least a part of the bottom-face part is made of a material letting light pass therethrough.

3. The container for optical measurement according to claim 1, wherein
at least a part of the side wall part facing the space on the side of the bottom-face part is made of a material letting light pass therethrough.

4. The container for optical measurement according to any one of claims 1 to 3, wherein
the space on the side of the bottom-face part and the space on the other end side each include a plurality of spaces divided in a direction intersecting the direction of an axis of the side wall part.

5. The container for optical measurement according to any one of claims 1 to 4, further comprising a partition wall that divides the space on the other end side in a direction intersecting the direction of an axis of the side wall part.

6. The container for optical measurement according to claim 5, wherein
the partition wall is connected to the filter in a liquid tight manner.

7. The container for optical measurement according to any one of claims 1 to 6, wherein
optical measurement is fluorescence measurement.
